# EUROPEAN PATENT SPECIFICATION

(11) **EP 3 642 541 B1**
(45) Date of publication and mention of the grant of the patent: **30.07.2025**
(21) Application number: 18820012.5
(22) Date of filing: 21.06.2018
(51) Int. Cl.: C09K 5/04

(54) **CASCADED REFRIGERATION SYSTEM**
KASKADEN-KÄLTEANLAGE
SYSTÈME DE RÉFRIGÉRATION EN CASCADE

(30) Priority: 21.06.2017 US 201762522836 P; 21.06.2017 US 201762522846 P
(43) Date of publication of application: 29.04.2020
(60) Divisional application: 23216915.1
(73) Proprietor: Honeywell International Inc., Morris Plains, NJ 07950 (US)
(72) Inventor: PETERSEN, Michael, Morris Plains NJ 07950 (US); POTTKER, Gustavo, Morris Plains NJ 07950 (US); YANA MOTTA, Samuel, Morris Plains NJ 07950 (US); VOGL, Ronald, Peter, Morris Plains NJ 07950 (US); SETHI, Ankit, Morris Plains NJ 07950 (US)
(74) Representative: Stepney, Gregory John
(86) International application number: PCT/US2018/038807
(87) International publication number: WO 2018/237175

(56) References cited:
- WO-A1-2017/027701
- WO-A1-2017/143018
- US-A1- 2012 216 551
- US-A1- 2013 160 478
- US-A1- 2013 180 278
- US-A1- 2013 298 581
- US-A1- 2014 150 492
- US-A1- 2015 191 639
- US-A1- 2016 320 105

## Description

### FIELD

The disclosure relates to refrigeration systems and methods, particularly, but not exclusively, refrigeration systems suited for use with low GWP refrigerants.

### BACKGROUND

The refrigeration industry is under increasing pressure - through regulatory changes and otherwise - to replace high global warming potential (GWP) refrigerants, such as R404A, with low GWP refrigerants, such as refrigerants with GWP below 150. This is of particularly importance in the commercial refrigeration system, where high volumes of refrigerant are used.

One approach has been to use low GWP refrigerants, such as carbon dioxide (R744) and hydrocarbon refrigerants. However, such an approach as has been heretofore used can suffer from significant safety and financial drawbacks, such as: poor system energy efficiency, leading to increased operating costs; high system complexity, leading to high initial system costs; low system serviceability and reliability, leading to high maintenance costs; and high system flammability. Systems which include highly flammable refrigerants according to prior arrangements have been particularly disadvantageous as they can lead to poor levels of safety; can conflict with regulatory code restrictions; and can increase liability on refrigeration system operators and manufacturers. Safety is a particular concern given that many commercial refrigeration applications, such as supermarket fridges, freezers and cold display cases are publically accessible and often operate in densely populated spaces.

Applicants have come to appreciate, therefore, that the refrigeration industry continues to need safe, robust and sustainable approaches for reducing the use of high GWP refrigerants which can be used with existing technologies.

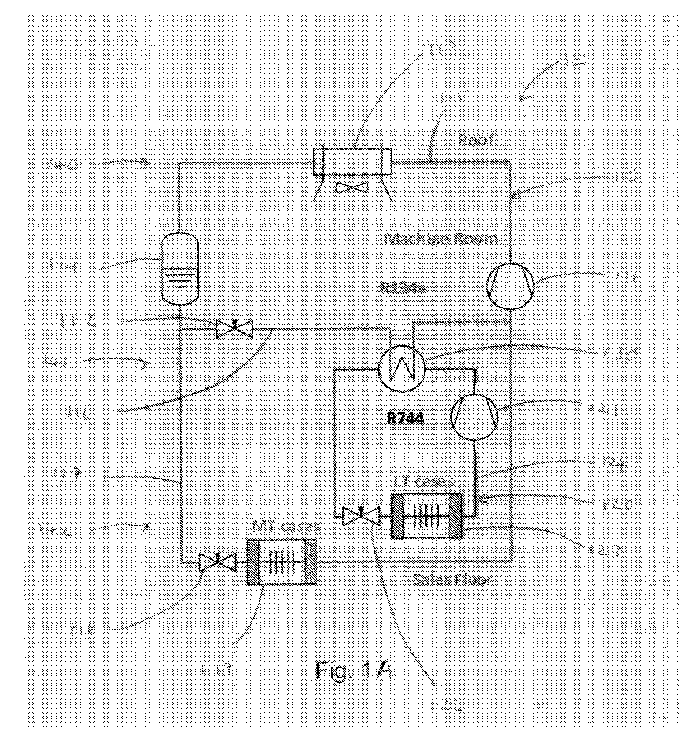

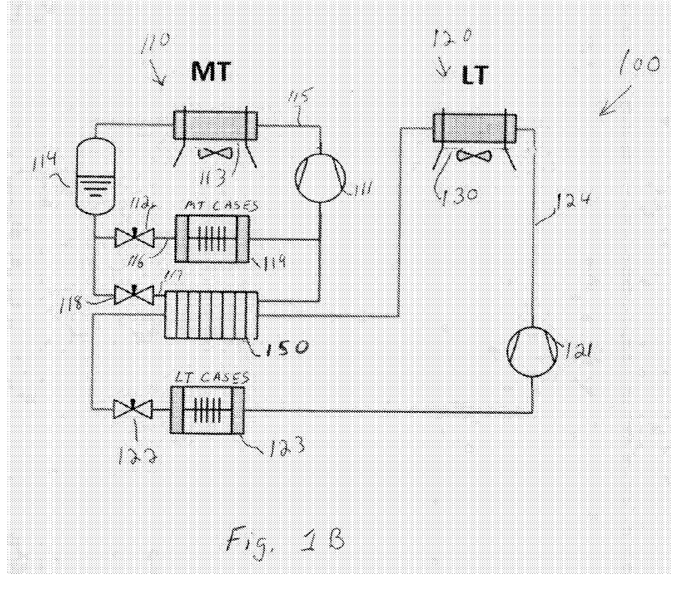

One such approach that has been previously used is shown in Figure 1A. Figure 1 shows a refrigeration system 100 which is commonly used for commercial refrigeration in supermarkets. The system 100 is a direct expansion system which provides both medium and low temperature refrigeration via medium temperature refrigeration circuit 110 and low temperature refrigeration circuit 120.

In a typical prior configuration labelled as 100 in Figure 1A, the medium temperature refrigeration circuit 110 has R134a as its refrigerant. The medium temperature refrigeration circuit 110 provides both the medium temperature cooling and removes the rejected heat from the lower temperature refrigeration circuit 120 via a heat exchanger 130. The medium temperature refrigeration circuit 110 extends between a roof 140, a machine room 141 and a sales floor 142. The low temperature refrigeration circuit 120 on the other hand has R744 as its refrigerant. The low temperature refrigeration circuit 120 extends between the machine room 141 and the sales floor 142. Usefully, as discussed above, R744 has a low GWP.

However, while refrigeration systems of the type disclosed in Figure 1A may be able to provide good efficiency levels, applicants have come to appreciate that systems of this type have at least two major drawbacks: first, such systems use the high GWP refrigerant R134a (R134a having a GWP of around 1300); and second, even though the low temperature portions of such systems uses the low GWP refrigerant R744, this refrigerant exhibits the many drawbacks discussed above, including significant safety and financial drawbacks.

US 2013/160478 A1 discloses a cascade cycle system comprising HFO1438mzz as the high temperature working fluid and HFO1234yf or HFO1234ze as the low temperature working fluid; wherein flooded evaporators and small compressors of about 5hp may be used.

### SUMMARY

The present invention includes a cascaded refrigeration system, as defined in the appended claims.

As used herein, the term "flammable" with respect to a refrigerant means that the refrigerant is not classified as A1 under ASHRAE 34-2016 test protocol defining conditions and apparatus and using the current method ASTM E681-09 annex A1). Accordingly, a refrigerant which is classified as A2L under ASHRAE 34-2016 test protocol defining conditions and apparatus and using the current method ASTM E681-09 annex A1 or is more flammable than the A2L classification, would be considered flammable.

Conversely, the term "non-flammable" with respect to a refrigerant means that the refrigerant is classified as A1 under ASHRAE 34-2016 test protocol defining conditions and apparatus and using the current method ASTM E681-09 annex A1).

As used herein, the term "medium temperature refrigeration" refers to refrigeration circuits in which the refrigerant circulating in the circuit is evaporating at a temperature of from about -5°C to about -15°C, and preferably at temperature of about -10°C. As used herein with respect to temperatures, the term "about" is understood to mean variations in the identified temperature of +/- 3°C. The refrigerant circulating in the medium temperature circuit can evaporate at a temperature of -10°C +/- 2°C, or at - 10°C +/- 1°C.

Medium temperature refrigeration of the present invention can be used, for example, to cool products such as dairy, deli meats and fresh food. The individual temperature level for the different products is adjusted based on the product requirements.

Low temperature refrigeration is typically provided at an evaporation level of about -25°C. As used herein, the term "low temperature refrigeration" refers to refrigeration circuits in which the refrigerant circulating in the circuit is evaporating at a temperature of from about -20°C to about -30°C, and preferably at temperature of about -25°C. The refrigerant circulating in the low temperature circuit can evaporate at a temperature of -25°C +/- 2°C, or at - 25°C +/- 1°C.

Low temperature refrigeration of the present invention can be used, for example, to cool products such as ice cream and frozen goods, and again, the individual temperature level for the different products is adjusted based on the product requirements.

Optionally, each of said low temperature refrigeration circuits is contained in a separate low temperature refrigeration unit.

Optionally, said heat exchanger is a flooded heat exchanger in which said medium temperature refrigerant evaporates in said heat exchanger by absorbing heat from said low temperature refrigerant.

As the term is used herein, "flooded heat exchanger" refers to a heat exchanger is which a liquid refrigerant is evaporated to produce refrigerant vapour with no substantial super heat. As the term is used herein, "no substantial super heat" means that the vapour exiting the evaporator is at a temperature that is not more than 1°C above the boiling temperature of the liquid refrigerant in the heat exchanger.

Optionally, the flammable low temperature refrigerant comprises at least about 50% by weight, or at least about 75% by weight, or at least 95% by weight, or at least 99% by weight of HFO-1234yf, transHFO-1234ze, or combinations of these.

Optionally, the flammable low temperature refrigerant comprises at least about 50% by weight, or at least about 75% by weight, or at least 95% by weight, or at least 99% by weight of HFO-1234yf, transHFO-1234ze, or combinations of these.

Optionally, the flammable low temperature refrigerant comprises at least about 50% by weight, or at least about 75% by weight, or at least 95% by weight, or at least 99% by weight of HFO-1234yf, transHFO-1234ze, or combinations of these and the heat exchanger is a flooded heat exchanger in which said medium temperature refrigerant evaporates in said heat exchanger by absorbing heat from said low temperature refrigerant.

In preferred embodiments, the second circuit, preferably a medium temperature circuit, may be located substantially completely outside of said plurality of first refrigeration units, preferably outside of said plurality of low temperature circuits. As used herein, the term "substantially completely outside" means that the components of the second refrigeration circuit are not within said first refrigeration units except that transport piping and the like which may be considered part of the second refrigeration circuit can pass into the first refrigeration units in order to provide heat exchange between the refrigerant of the first and second refrigeration circuits.

As used herein, the term "first refrigeration unit" and "low temperature refrigeration unit" means an at least partially closed or closable structure that is capable of providing cooling within at least a portion of that structure and which is structurally distinct from any structure enclosing or containing said second refrigeration circuit in its entirety. According to and consistent with such meanings, the preferred first refrigeration circuits and low temperature refrigeration circuits of the present invention are sometimes referred to herein as "self-contained" when contained within such first (preferably low temperature) refrigeration units, in accordance with the meanings described herein.

The second refrigeration circuit may further comprise a fluid receiver.

Each first refrigeration circuit may be self-contained within its respective refrigeration unit.

Each refrigeration unit may be located within a first area. The first area may be a shop floor. This means that each first refrigeration circuit (preferably low temperature refrigeration circuit) may also be located within a first area, such as a shop floor.

Each refrigeration unit may comprise a space and/or objects contained within a space to be chilled, and preferably that space is within the refrigeration unit. Each evaporator may be located to chill its respective space/objects, preferably by cooling air within the space to be chilled.

As mentioned above, the second refrigeration circuit, and preferably medium temperature refrigeration circuit, may have components thereof that extend between the first refrigeration unit (preferably low temperature refrigeration unit) and a second area. The second area may be, for example, a machine room which houses a substantial portion of the components of the second refrigeration circuit.

The second refrigeration circuit (preferably medium temperature refrigeration unit) may extend to a second and a third area. The third area may be an area outside of the building or buildings in which the first refrigeration units and the second area(s) are located. This allows for ambient cooling to be exploited.

Unless otherwise indicated herein for a particular embodiment, the refrigerant in each of the first refrigeration circuits may be different from or the same as the other refrigerants in the first refrigeration circuits, and each may also be the same or different to the refrigerant in the second refrigeration circuit.

Unless otherwise indicated herein for a particular embodiment, the refrigerant in the first refrigeration circuits and/or the refrigerant in the second refrigeration circuit may have low Global Warming Potential (GWP).

Unless otherwise indicated herein for a particular embodiment, the refrigerant in the first refrigeration circuits and/or the refrigerant in the second refrigeration circuit may have a GWP which is less than 150. This is enabled by each first refrigeration circuit being provided in a respective refrigeration unit.

Unless otherwise indicated herein for a particular embodiment, the refrigerant in the second refrigeration circuit may be non-flammable, that is, classified as A1 under ASHRAE 34 (as measured by ASTM E681) or classified as A2L under ASHRAE 34 (as measured by ASTM E681). This may be desirable since the second refrigeration circuit may be quite long and may extend between different areas of a building: for example, between a shop floor (where refrigeration units might be deployed) to a machine room. Consequently, it may be unsafe to have a flammable refrigerant in the second refrigeration circuit since both the risk of leaks and the severity of potential leaks is increased as the second refrigeration circuit spans a greater area and therefore exposes more people and/or structures to risk of fire.

The refrigerant in the first refrigeration circuits may be flammable. This may be allowable in practice, at least in part, as a result of each first refrigeration circuit being provided in a respective refrigeration unit have a relatively low power compressor(s) contained therein.

Each first refrigeration circuit may comprise at least one fluid expansion device. The at least one fluid expansion device may be a capillary tube or an orifice tube. This is enabled by the conditions imposed on each first refrigeration circuit by its respective refrigeration unit being relatively constant. This means that simpler flow control devices, such as capillary and orifice tubes, can be and preferably are used to advantage in the first refrigeration circuits.

The average temperature of each of the first refrigeration circuits may be lower than the average temperature of the second refrigeration circuit. This is because the second refrigeration circuit may be used to provide cooling, that is, remove heat from, the first refrigeration circuits; and each first refrigeration circuit may cool a space to be chilled in its respective refrigeration unit.

The second refrigeration circuit may cool, that is, remove heat from, each of the first refrigeration circuits.

Each heat exchanger may be arranged to transfer heat energy between its respective first refrigeration circuit and the second refrigeration circuit at a respective circuit interface location.

The second refrigeration circuit may comprise a second evaporator. The second evaporator may be coupled in parallel with the circuit interface locations.

Each of the circuit interface locations may be coupled in series-parallel combination with each other of the circuit interface locations. Usefully, this means that if one of the circuit interface locations, first refrigeration circuits, or first refrigeration units has a fault or blockage detected, the location, circuit or unit at fault can be isolated and/or bypassed by the second refrigeration circuit so that faults do not propagate through the system.

Each of the circuit interface locations may be coupled in series with at least one other circuit interface location.

Each of the circuit interface locations may be coupled in series with each other of the circuit interface locations.

Each of the circuit interface locations may be coupled in parallel with at least one other circuit interface location.

Each of the circuit interface locations may be coupled in parallel with each other of the circuit interface locations.

The second refrigerant, preferably the medium temperature refrigerant, may comprise a blended refrigerant. The blended refrigerant may comprise R515A.

R515A refrigerant is non-flammable. This is useful since the second refrigerant circuit (preferably medium temperature refrigerant) may span numerous areas, and so having a non-flammable refrigerant is important for reducing the severity of potential leaks.

In other embodiments the non-flammable refrigerant may comprise, or comprise at least about 50%, or comprise at least 75%, or consist essentially of or consist of HFO-1233zd(E).

The first refrigerant (preferably low temperature refrigerant), which is used in the first refrigerant circuits (preferably low temperature refrigeration circuits), may comprise any of R744, C3 - C4 hydrocarbons, R1234yf, R1234ze(E), R455A and combinations of these. Hydrocarbons may comprise any of R290, R600a or R1270. These refrigerants are low GWP.

The second refrigeration circuit may further comprise a compressor.

The second refrigeration circuit may comprise an ambient cooling branch and a compressor branch comprising the compressor. This means that the compressor branch may be bypassed. The benefit of bypassing the compressor branch is that, if the ambient conditions are sufficiently cool relative to the second refrigerant, the compressor stage can be bypassed as sufficient cooling is provided by the ambient air.

The ambient cooling branch may be coupled in parallel with the compressor branch. The parallel arrangement allows for the compressor branch to be bypassed by the second refrigerant.

The ambient cooling branch may be exposed to outside ambient temperatures. This is for cooling the second refrigerant in the place of the compressor stage.

The ambient cooling branch may extend to the outside of the building or buildings comprising the first area.

Refrigerant entering the ambient cooling branch may be cooled by the ambient air temperature when the ambient air temperature is less than the temperature of the refrigerant entering the ambient cooling branch.

The ambient cooling branch may be coupled in series with the pump.

A valve may be provided at one of both of the junctions between the ambient cooling branch and the compressor branch to control the flow of refrigerant in each of the ambient cooling branch and the compressor branch. This allows control of whether or not and how much the compressor branch and/or ambient cooling branch are utilised.

The pump, the further evaporator and the circuit interface locations may be located between the valve or valves.

### BRIEF DESCRIPTION OF THE DRAWINGS

Exemplary arrangements of the disclosure shall now be described with reference to the drawings in which:
Figure 1A shows an example of a previously used refrigeration system;
Figure 1B shows an example of a refrigeration system that is the basis for the comparative examples described herein.
Figure 2 shows a cascaded refrigeration system;
Figure 3 shows an alternative cascaded refrigeration system;
Figure 4 shows a cascaded refrigeration system which uses a flooded evaporator;
Figure 4A shows an alternative cascaded refrigeration system which uses a flooded evaporator;

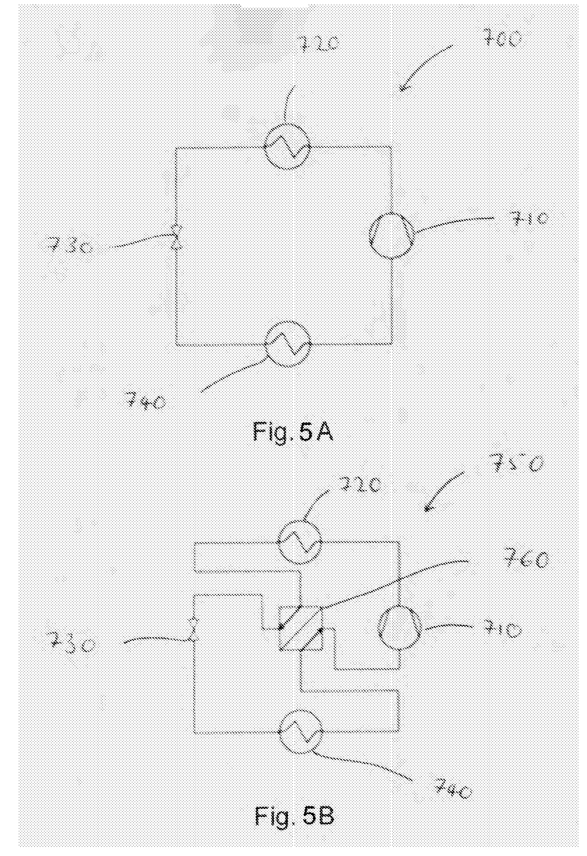

Figures 5A and 5B show refrigeration systems with and without suction line heat exchangers, respectively; and
Figure 6 shows a graph of global warming potential for a refrigeration system having R515A and R744 refrigerants.

Throughout this specification, like reference numerals refer to like parts.

### DETAILED DESCRIPTION

### Comparative Example

To aid the person skilled in the art's understanding of the refrigeration circuits of this disclosure and their respective advantages, a brief explanation of the functioning of a refrigeration system will be given in reference to the comparative refrigeration systems shown in Figures 1A and 1B.

Figure 1B shows an example of a refrigeration system 100 for comparison with the further systems described below. The system 100 comprises a medium temperature refrigeration circuit 110 and a low temperature refrigeration circuit 120.

The low temperature refrigeration circuit 120 has a compressor 121, an interface with a heat exchanger 130 for rejecting heat to ambient conditions, an expansion valve 122 and an evaporator 123. The low temperature refrigeration circuit 120 interfaces with the medium temperature refrigeration circuit 110 through the inter-circuit heat exchanger 150, which serves to reject heat to from the low temperature refrigerant to the medium temperature refrigerant and thereby produce a subcooled refrigerant liquid in the low temperature refrigerant cycle. The evaporator 123 is interfaced with a space to be chilled, such as the inside of a freezer compartment. The components of the low temperature refrigeration circuit are connected in the order: evaporator 123, compressor 121, heat exchanger 130, inter-circuit heat exchanger 150, and expansion valve 122. The components are connected together via pipes 124 containing a low temperature refrigerant.

The medium temperature refrigeration circuit 110 has a compressor 111, a condenser 113 for rejecting heat to ambient conditions and a fluid receiver 114. The liquid medium temperature refrigerant from receiver 114 is manifolded to flow to each of expansion valves 112 and 118, thus providing two parallel connected branches: a low temperature sub-cooling cooling branch 117 downstream of expansion device 118 and a medium temperature cooling branch 116 downstream of expansion device 112. The low temperature sub-cooling branch includes the inter-circuit heat exchanger which provides sub-cooling to the low temperature circuit as described above. The medium temperature cooling branch 116 includes medium temperature evaporator 119, which is interfaced with a space to be chilled, such as the inside of a refrigerated compartment.

The medium temperature refrigerant is a high GWP refrigerant such as R134a. R134A is a hydro fluorocarbon (HFC). R134a is non-flammable and provides a good coefficient of performance.

The system 100 spans three areas of a building: a roof where the condensers 113 and 130 are located; a machine room where the compressors 111, 112, heat exchanger 150, receiving tank 114 and expansion device 118 are located; and a sales floor 142 where the LT case, the MT case, and each of their expansion devices are located. The low temperature refrigeration circuit 120 and the medium temperature refrigeration circuit 110 thus each extend between the sales floor, the machine room and the roof. In use, the medium temperature circuit 110 provides medium temperature chilling to spaces to be chilled via the evaporator 119 and the low temperature circuit 120 provides low temperature chilling to spaces to be chilled via the evaporator 123. The medium temperature circuit 110 also removes heat from the liquid condensate from the low temperature condenser 120, thus providing subcooling to the liquid entering the evaporator 123.

The individual and overall functionality of the various components of the low temperature refrigeration circuit 120 will now be described. Starting with heat exchanger 150, heat exchanger 130 is a device suitable for transferring heat between the low and medium temperature refrigerants. In one example, the heat exchanger 150 is a shell and tube heat exchanger. Other types of heat exchangers, such as plate heat exchangers and other designs, may also be used. In use, the medium temperature refrigerant absorbs heat from the low temperature refrigerant such that the low temperature refrigerant is chilled. This removal of heat via the heat exchanger 150 results in the liquid low temperature refrigerant from condenser 130 being subcooled, after which the subcooled, low temperature refrigerant flows to the expansion valve 122 via a liquid line of the pipes 124. The role of the expansion valve 122 is to reduce the pressure of the low temperature refrigerant. By doing so, the temperature of the low temperature refrigerant is correspondingly reduced since pressure and temperature are proportional. The low temperature, low pressure refrigerant then flows or is pumped to the evaporator 123. The evaporator 123 is used to transfer heat from the space to be cooled, e.g., low temperature refrigeration cases in a super market, to the low temperature refrigerant. That is, at the evaporator 123, the liquid refrigerant accepts heat from the space to be chilled and, in doing so, is evaporated to a gas. After the evaporator 123, the gas is drawn by the compressor 121, through a suction line of the pipes 124, to the compressor 121. On reaching the compressor 121, the low pressure and low temperature gaseous refrigerant is compressed. This causes the refrigerant temperature to increase. Consequently, the refrigerant is converted from a low temperature and low pressure gas to a high temperature and high pressure gas. The high temperature and high pressure gas is released into a discharge pipe of the pipes 124 to travel to the heat exchanger (condenser) 130, where the gas is condensed to a liquid in the manner previously described. This describes the operation of the low temperature refrigeration circuit 120 specifically, however the principles explained here can be applied to refrigeration cycles, generally.

The individual and overall functionality of the various components of the medium temperature refrigeration circuit 110 will now be described. Starting with heat exchanger 150, as described above the medium temperature refrigerant absorbs heat from the low temperature refrigerant via the heat exchanger 150. This absorption of heat causes the refrigerant in the medium temperature circuit 150, which is a low temperature gas and/or a mixture of gas and liquid on entering the heat exchanger 150, to be change liquid to the gas phase and/or to increase the temperature of the gas in the case where superheating will be produced. On leaving the heat exchanger 150, the gaseous refrigerant is sucked into the compressor 111 (along with the refrigerant from the evaporator 119) and is compressed by the compressor 111 to a high temperature and high pressure gas. This gas is released into the pipes 115 and travels to the condenser 113 which, in this example, is located on a roof of a building. In the condenser 113, the gaseous medium temperature refrigerant releases heat to the outside ambient air and so is cooled and condenses to a liquid. After the condenser 113, the liquid refrigerant collects in a fluid receiver 114. In this example, the fluid receiver 114 is a tank. On leaving the fluid receiver 114, the liquid refrigerant is manifolded to parallel connected medium temperature branch 116 and subcooling cooling branch 117. In the medium temperature branch 116, the liquid refrigerant flows to the expansion valve 112 which is used to lower the pressure and therefore temperature of the liquid refrigerant. The relatively cold liquid refrigerant then enters the heat exchanger 119 where it absorbs heat from the space to be chilled which is interfaced with the evaporator 119f. In the subcooling branch 117, the liquid refrigerant similarly flows first to an expansion valve 118 where the pressure and temperature of the refrigerant is lowered. After the valve 118, the refrigerant flows to the inter-circuit heat exchanger 150, as described above. From there, the gaseous refrigerant from the heat exchanger is sucked by the compressor 111 to the compressor 111 where it re-joins the refrigerant from the medium temperature cooling branch 116.

Although not mentioned above, it will be clear that to function as intended, the temperature of the refrigerant in the medium temperature circuit 110 as it enters the heat exchanger 150 must be less than the temperature of the refrigerant in the low temperature circuit 120 as it enters the heat exchanger 150. If this were not the case, the medium temperature circuit 110 would not provide the desired subcooling to the low temperature refrigerant in circuit 120.

The above describes the operation of the comparative example of a refrigeration system 100 as illustrated in Figure 1B. The principles of refrigeration described in reference to Figure 1B can be applied equally well to the other refrigeration systems of this disclosure.

### Overview of Preferred Embodiments

A number of refrigeration systems according to preferred embodiments of the present invention are described below. Each system has a number of refrigeration units and each of the refrigeration units has at least one dedicated refrigeration circuit located within it. That is, each refrigeration unit contains at least one refrigeration circuit.

The refrigeration circuit contained within a refrigeration unit may comprise at least a heat exchanger that removes heat to the refrigerant in the circuit, and an evaporator that adds heat to the refrigerant.

The refrigeration circuit contained within a refrigeration unit may comprise a compressor, at least a heat exchanger that removes heat from the refrigerant in the circuit (preferably by removing heat from the refrigerant vapor exiting the compressor), and an evaporator that adds heat to the refrigerant (preferably by cooling the area of the refrigeration unit being chilled). Applicants have found that the size of the compressor used in the preferred first refrigeration circuits (and preferably low temperature refrigeration circuits) of the present invention are important for achieving at least some of the highly advantageous and unexpected results of preferred embodiments of the present invention, and in particular, each compressor in in the circuit is preferably a small size compressor. As used herein, the term "small size compressor" means the compressor has a power rating of about 1.49 kilowatts (about 2 horse power) or less. As used herein with respect to compressor power rating, this value is determined by the input power rating for the compressor. As used with respect to compressor horse power rating, "about" means the indicated kilowatts +/- 0.37 kilowatts (about 0.5 horse power) The compressor size in preferred embodiments may be from about 0.07 kilowatts (0.1 horse power) to about 1.49 kilowatts (2 horse power), or from about 0.07 kilowatts (0.1 horse power) to about 0.75 kilowatts (1 horse power) . The compressor size may be from about 0.07 kilowatts (1 horse power) to about 0.55 kilowatts (0.75 horse power), or from about 0.07 kilowatts (0.1 horse power) up to 0.37 kilowatts (0.5 horse power).

A refrigeration unit may be an integrated physical entity, i.e. an entity which is not designed to be dismantled into component parts. A refrigeration unit might be a fridge or a freezer, for example. It will be understood that more than one refrigeration circuit (including particularly more than one low temperature refrigeration circuit) may be included within each refrigeration unit (including preferably each low temperature refrigeration unit).

The refrigeration circuits provided within each refrigeration unit may themselves be cooled by a common refrigeration circuit at least partially external to the refrigeration units. In contrast to the dedicated refrigeration circuits contained within each refrigeration unit, common refrigeration circuits (which are generally referred to herein as second and third refrigeration circuits) may be extended circuits which extend between multiple areas of the building housing the units: such as between a sales floor (where the refrigeration units are located) and a machine room and/or a roof or outside area.

Each refrigeration unit may comprise at least one compartment for storing goods, such as perishable goods. The compartments may define a space to be chilled by a refrigeration circuit contained within the refrigeration unit.

### Cascaded refrigeration system

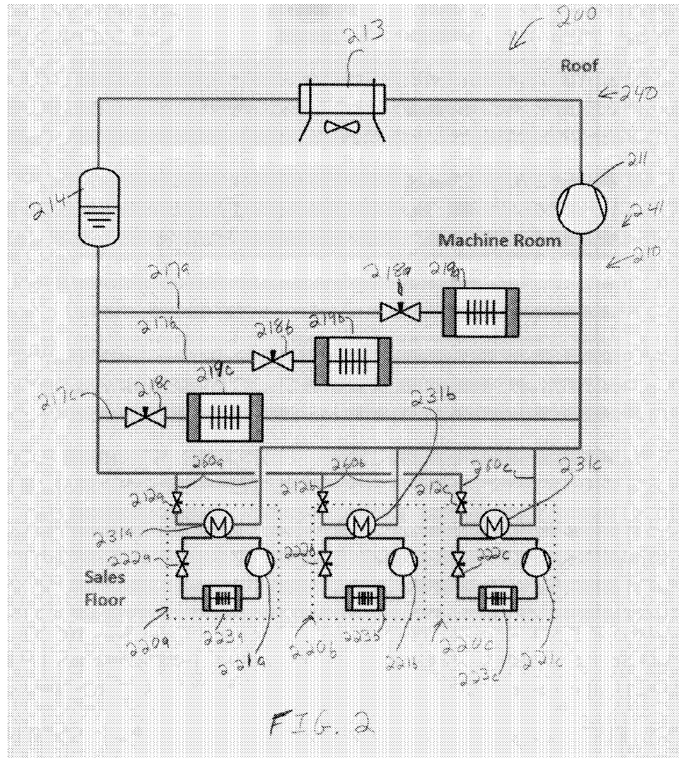

One embodiment of a refrigeration system according to the present invention is illustrated schematically in Figure 2 and described in detail below.

Figure 2 shows a cascaded refrigeration system 200. More specifically, Figure 2 shows a refrigeration system 200 which has three first refrigeration circuits 220a, 220b and 220c. Each of the first refrigeration circuits 220a, 220b, 220c has an evaporator 223, a compressor 221, a heat exchanger 230 and an expansion valve 222. While each of the compressors, evaporators and heat exchangers in the circuit are illustrated by a single icon, it will be appreciated that the compressor, the evaporator, the heat exchanger, expansion valve, etc can each comprise a plurality of such units. In each circuit 220a, 220b and 220c, the evaporator 223, the compressor 221, the heat exchanger 230 and the expansion valve 222 are connected in series with one another in the order listed. Each of the first refrigeration circuits 220a, 220b and 220c is included within a separate respective refrigeration unit (not shown). In this example, each of the three refrigeration units is a freezer unit and the freezer unit houses its respective first refrigeration circuit. In this way, each refrigeration unit comprises a self-contained and dedicated refrigeration circuit. The refrigeration units (not shown), and therefore the first refrigeration circuits 220a, 220b, 220c, are arranged on a sales floor 242 of a supermarket.

In this example, the refrigerant in each of the first refrigeration circuits 220a, 220b, 220c is a low GWP refrigerant such as R744, C3 - C4 hydrocarbons (R290, R600a, R1270), R1234yf, R1234ze(E) or R455A. As the skilled person will appreciate, the refrigerants in each of the first refrigeration circuits 220a, 220b,220c may the same or different to the refrigerants in each other of the first refrigeration circuits 220a, 220b, 220c.

The refrigeration system 200 also has a second refrigeration circuit 210. The second refrigeration circuit 210 has a compressor 211, a condenser 213 and a fluid receiver 214. The compressor 211, the condenser 213 and the fluid receiver 214 are connected in series and in the order given. While each of the compressors, condensers, fluid receivers, etc. in the second circuit are illustrated by a single icon, it will be appreciated that the compressor, the evaporator, the heat exchanger, expansion valve, etc can each comprise a plurality of such units. The second refrigeration circuit 210 also has four parallel connected branches: three medium temperature cooling branches 217a, 217b and 217c; and one low temperature cooling branch 216. The four parallel connected branches 217a, 217b, 217c and 216 are connected between the fluid receiver 214 and the compressor 211. Each of the medium temperature cooling branches 217a, 217b and 217c has an expansion valve 218a, 218b and 218c and an evaporator 219a, 219b and 219c, respectively. The expansion valve 218 and evaporator 219 are connected in series and in the order given between the fluid receiver 214 and the condenser 211. The low temperature cooling branch 216 has an expansion valve 212 and an interface, in the form of inlet and outlet piping, conduits, valves and the like (represented collectively as 260a, 260b and 260c, respectively) which bring the second refrigerant to and from each of the heat exchangers 230a, 230b, 230c of the first refrigeration circuits 220a, 220b, 220c. The low temperature cooling branch 216 interfaces each of the heat exchangers 230a, 230b, 230c of the first refrigeration circuits 220a, 220b, 220c at a respective circuit interface location 231a, 231b, 231c. Each circuit interface location 231a, 231b, 231c is arranged in series-parallel combination with each other of the circuit interface locations 231a, 231b, 231c.

The medium temperature refrigeration circuit 210 has components which extend between the sales floor 242, a machine room 241 and a roof 140. The low temperature cooling branch 216 and the medium temperature cooling branches 217a, 217b, 217c of the medium temperature refrigeration circuit 210 are located on the sales floor 242. The compressor 211 and the fluid receiver 214 are located in the machine room 241. The condenser 213 is located where it can be readily exposed to ambient conditions, such as on the roof 240.

In this example, the refrigerant in the medium temperature refrigeration circuit 210 is a blend comprising R515A. R515A is a refrigerant which consists essentially of, and preferably consists of, about 88% by weight of the hydrofluoroolefin (HFO) 1234ze(E) and about 12% of HFC227ea (heptafluoropropane). Usefully, the blend results in a non-flammable refrigerant, which improves safety. Further advantageously, the blend has a low GWP, making it an environmentally friendly solution.

Use of the preferred embodiments as illustrated in Figure 2 can be summarized as follows:
- each of the first refrigeration circuits 220a, 220b, 220c absorbs heat via their evaporators 223 to provide low temperature cooling to a space to be chilled (not shown);
- the second refrigeration circuit 210 absorbs heat from each of the heat exchangers 230a, 230b, 230c to cool the first refrigeration circuits 220a, 220b, 220c;
- the second refrigeration circuit 210 absorbs heat at each of the evaporators 219 to provide medium temperature cooling to spaces to be chilled (not shown); and
- heat is removed from the refrigerant in the second refrigeration circuit 210 in the chiller 213.

A number of beneficial results can be achieved using arrangements of the present invention of the type shown in Figure 2, particularly from each first refrigeration circuit 230 being self-contained in a respective refrigeration unit.

For example, installation and uninstallation of the refrigeration units and the overall cascaded refrigeration system 200 is simplified. This is because the refrigeration units, with their built-in, self-contained first refrigeration circuits 220a, 220b, 220c, can be easily connected or disconnected with the second refrigeration circuit 210, with no modification to the first refrigeration circuit 220, 220b, 220c required. In other words, the refrigeration units may simply be 'plugged' in to, or out of, the second refrigeration circuit 210.

Another advantage is that each refrigeration unit, including its respective first refrigeration circuit 220a, 220b, 220c, can be factory tested for defaults before being installed into a live refrigeration system 200. This mitigates the likelihood of faults, which can include leaks of potentially harmful refrigerants. Accordingly, reduced leak rate can be achieved.

Another advantage is that the lengths of the first refrigeration circuits 220a, 220b, 220c can be reduced since each circuit 220a, 220b, 220c is arranged in its respective refrigeration unit, and does not extend between a series of units. The reduced circuit length can result in improved efficiency as there is reduced heat infiltration in shorter lines due to reduced surface area. Further, reduced circuit length can also result in reduced pressure drop, which improves the system 200 efficiency.

The reduced circuit length, and the provision of the circuits self-contained within respective refrigeration units, also provides the ability to use more flammable refrigerants, such as R744, hydrocarbons (R290, R600a, R1270), R1234yf, R1234ze(E) or R455A, which applicants have come to appreciate is a highly beneficial result. This is because both the likelihood of the refrigerant leaking is reduced (as discussed above) and because, even if the refrigerant were to leak, the leak would be contained to the relatively small area and containable area of the respective refrigeration unit, and because of the small size of the units, only a relatively small amount of refrigerant charge is used. In addition, this arrangement would permit the use of relatively low cost flame mitigation contingency procedures and/or devices since the area containing potentially flammable materials is much smaller, confined and uniform. Such more flammable refrigerants can have lower global warming potential (GWP). Advantageously therefore, governmental and societal targets for the use of low GWP refrigerants may be met and potentially even exceeded without compromising on safety of the system.

Another advantage is that each first refrigeration circuit 220a, 220b, 220c may only cool their respective refrigeration unit. This means that the load on each first refrigeration circuit 220a, 220b, 220c may remain relatively constant. That is, constant conditions are applied to the condensing 231 and evaporating 223 stages of the first refrigeration circuit 220. This allows for the simplification of the design of the first refrigeration circuit 220 in that passive expansion devices 222, such as capillary tubes or orifice tubes, can be used. This is in contrast to more complex circuits where electronic expansion devices and thermostatic expansion valves need to be used. Since the use of such complex devices is avoided, costs can be reduced and reliability can be increased.

Furthermore, importantly, the provision of a flooded heat exchanger in the second refrigeration circuit according to such embodiments results in improved heat transfer between the first and second circuits. Accordingly, the efficiency of the overall refrigeration system is improved.

There are several advantages that may arise from circuit interface locations being coupled in parallel with other circuit interface locations. One advantage may be that resilience is provided in the system since a fault associated with or suffered at one circuit interface location will not impact other circuit interface locations. This is because each circuit interface location is serviced by a respective branch of the second refrigeration circuit. Another advantage may be that heat transfer efficiency between first and second refrigeration circuits is improved because the temperature of the second refrigerant before each circuit interface location can be kept relatively constant. In contrast, if two circuit interface locations were coupled in series, the temperature of the refrigerant in the second refrigeration circuit may be higher before the downstream circuit interface location, than before the upstream circuit interface location.

Overall, the provision of a plurality of first refrigeration circuits according to the present invention , with each one arranged in a respective refrigeration unit, preferably being arranged as a self-contained refrigeration circuit, has such benefits as: reducing leak rates; simplifying the overall refrigeration system; enabling the use of otherwise unsafe low GWP refrigerants; improving maintenance and installation; and reducing pressure drop, leading to improved system efficiency.

Particularly in view of the advantages described herein, the present invention includes a cascaded refrigeration system, comprising: a plurality of first refrigeration circuits, with each first refrigeration circuit comprising a first refrigerant which is flammable and which has a GWP of about 150 or less, a compressor having a horse power rating of about about 1.49 kilowatts (about 2 horse power) or less, and a heat exchanger in which said first refrigerant condenses; and a second refrigeration circuit containing a second refrigerant which is non-flammable, and an evaporator in which said second refrigerant evaporates at a temperature below said first refrigerant condensing temperature wherein said second refrigerant evaporates in said heat exchanger by absorbing heat from said first refrigerant.

Particularly in view of the advantages described herein, the present invention also includes a cascaded refrigeration system, comprising: a plurality of first refrigeration circuits, with each first refrigeration circuit comprising a first refrigerant which is flammable and which has a GWP of about 150 or less, a compressor having a horse power rating of about 1.49 kilowatts (about 2 horse power) or less, and a heat exchanger in which said first refrigerant condenses; and a second refrigeration circuit containing a second refrigerant which is non-flammable and which has a GWP of up to about 500, and an evaporator in which said second refrigerant evaporates at a temperature below said first refrigerant condensing temperature wherein said second refrigerant evaporates in said heat exchanger by absorbing heat from said first refrigerant.

The present invention includes a cascaded refrigeration system,

In preferred embodiments, each low temperature refrigeration circuit comprises a flammable low temperature refrigerant having a GWP of about 150 or less and comprising at least about 50% by weight, or at least about 75% by weight, or at least 95% by weight, or at least 99% by weight of R744, R290, R600a, R1270, R1234yf, R1234ze(E), R455A and combinations of these.

In preferred embodiments, each low temperature refrigeration circuit comprises a flammable low temperature refrigerant having a GWP of about 150 or less and comprising at least about 50% by weight, or at least about 75% by weight, or at least 95% by weight, or at least 99% by weight of R744, R290, R600a, R1270, R1234yf, R1234ze(E), R455A and combinations of these and the medium temperature refrigeration circuit contains a medium temperature refrigerant, wherein said medium temperature refrigerant is non-flammable and has a GWP of up to about 500.

In preferred embodiments, each low temperature refrigeration circuit comprises a flammable low temperature refrigerant having a GWP of about 150 or less and comprising at least about 50% by weight, or at least about 75% by weight, or at least 95% by weight, or at least 99% by weight of R744, R290, R600a, R1270, R1234yf, R1234ze(E), R455A and combinations of these and the medium temperature refrigeration circuit contains a medium temperature refrigerant, wherein said medium temperature refrigerant is non-flammable having a GWP of up to about 500 and comprising at least about 50% by weight, or at least about 75% by weight, or at least 85% by weight of R1234ze(E).

In preferred embodiments, each low temperature refrigeration circuit comprises a flammable low temperature refrigerant having a GWP of about 150 or less and comprising at least about 50% by weight, or at least about 75% by weight, or at least 95% by weight, or at least 99% by weight of R744, R290, R600a, R1270, R1234yf, R1234ze(E), R455A and combinations of these the medium temperature refrigeration circuit contains a medium temperature refrigerant, wherein said medium temperature refrigerant is non-flammable having a GWP of up to about 500 and comprising at least about 50% by weight, or at least about 75% by weight, or at least 85% by weight of R1234ze(E) and from about 10% by weight to about 15% by weight of R227ea.

In preferred embodiments, each low temperature refrigeration circuit comprises a flammable low temperature refrigerant having a GWP of about 150 or less and comprising at least about 50% by weight, or at least about 75% by weight, or at least 95% by weight, or at least 99% by weight of R744, R290, R600a, R1270, R1234yf, R1234ze(E), R455A and combinations of these and the medium temperature refrigeration circuit contains a medium temperature refrigerant, wherein said medium temperature refrigerant is non-flammable having a GWP of up to about 500 and comprising about 88% by weight of R1234ze(E) and about 12% by weight of R227ea.

In preferred embodiments, each low temperature refrigeration circuit comprises a flammable low temperature refrigerant having a GWP of about 150 or less and comprising at least about 50% by weight, or at least about 75% by weight, or at least 95% by weight, or at least 99% by weight of R744, R290, R600a, R1270, R1234yf, R1234ze(E), R455A and combinations of these and the medium temperature refrigeration circuit contains a medium temperature refrigerant, wherein said medium temperature refrigerant is non-flammable having a GWP of up to about 500 and comprising at least about 70% by weight of R1234ze(E), R1234yf or combinations of these.

In preferred embodiments, each low temperature refrigeration circuit comprises a flammable low temperature refrigerant having a GWP of about 150 or less and comprising at least about 50% by weight, or at least about 75% by weight, or at least 95% by weight, or at least 99% by weight of R744, R290, R600a, R1270, R1234yf, R1234ze(E), R455A and combinations of these and the medium temperature refrigeration circuit contains a medium temperature refrigerant, wherein said medium temperature refrigerant is non-flammable having a GWP of up to about 500 and comprising at least about 70% by weight of R1234ze(E), R1234yf or combinations of these and further comprising one or more of R1233zd(E) and CF3I.

### Cascaded refrigeration system - alternatives

As the person skilled in the art will appreciate in view of the teachings contained here, there may be any number of first refrigeration circuits 220. In particular, there may be as many first refrigeration circuits 220 as there are refrigeration units to be cooled. Accordingly, the second refrigeration circuit 210 may be interfaced with any number of first refrigeration circuits 220.

As will be clear to the skilled person in view of the teachings contained here, there may be any number and arrangement of medium temperature cooling branches 217 and evaporators 218.

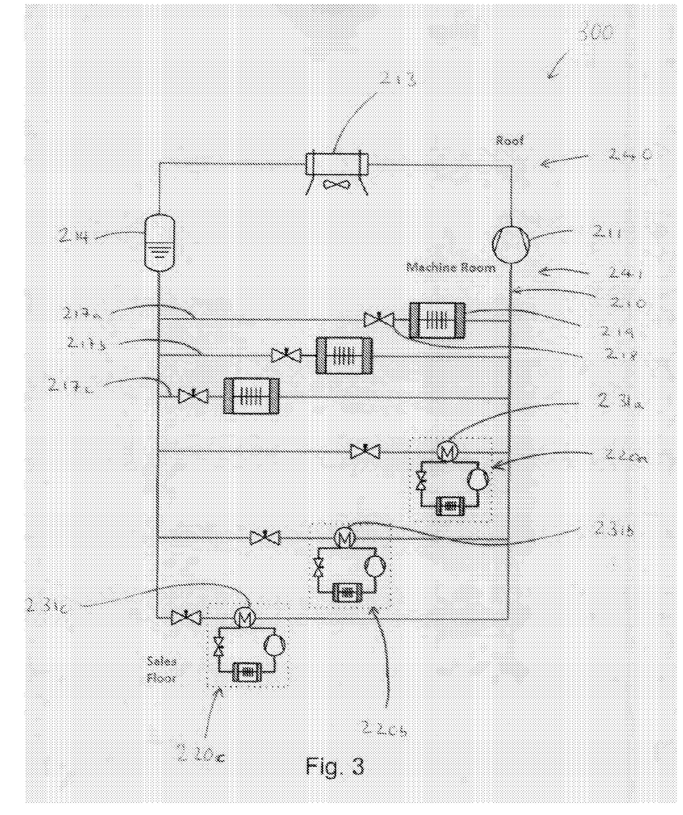

In alternative arrangements, each first refrigeration circuit 220 may be arranged fully in parallel with each other first refrigeration circuit 220. An example of such an arrangement is shown in Figure 3. Figure 3 shows a system 300 where each circuit interface location 231a, 231b, 231c is arranged fully in parallel with each other circuit interface location 231a, 231b, 231c. The components of the system 300 are otherwise the same as in system 200 (described in reference to Figure 2), and components of the system 300 function in substantially the same way as the system 200, although it will be appreciated that the performance of the overall system and other important features of the overall system can be significantly impacted by this change in the arrangement.

Usefully, this means that a given portion of refrigerant from the second refrigeration circuit 210 only passes through one heat exchanger 230 before it is returned to the compressor 211. This arrangement thus ensures that each of the heat exchangers 230 will receive second refrigerant at about the same temperature, since the arrangement prevents any of the heat exchanger from receiving a portion of the refrigerant that is pre-warmed as a result of passing through an upstream heat exchanger, as would be the case in a series arrangement.

As will be clear to the person skilled in the art in view of the teachings contained here, many other arrangements of the circuit interface locations 231a, 231b, 231c with respect to one and the second refrigeration circuit 210 can be achieved and indeed are envisaged.

As will be clear to the person skilled in the art in view of the teachings contained here, by virtue of the preferred modular first refrigeration circuit design the refrigeration system of the preferred embodiments of the present invention allows use of non-flammable, low-pressure refrigerants with relatively low GWP in the second refrigeration circuit 210. Further, the preferred systems of the present invention produce the unexpected result of relatively safe and efficient se of flammable, low-pressure refrigerants with low GWP in the first refrigeration circuits, thereby providing a refrigeration system of reduced environmental impact and have excellent environmental properties, excellent safety features and improved system efficiency.

### Cascaded refrigeration system with Flooded Evaporator

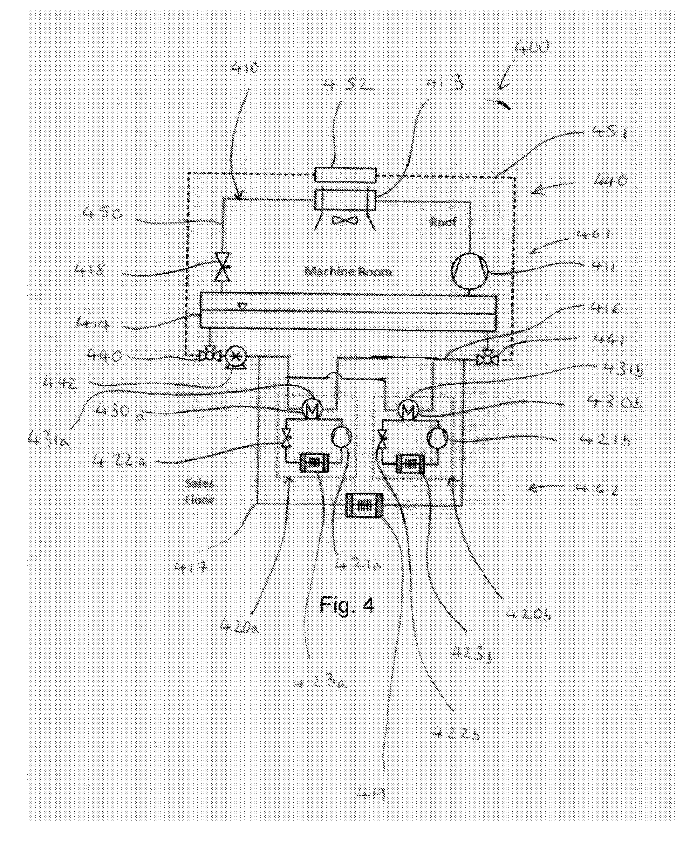

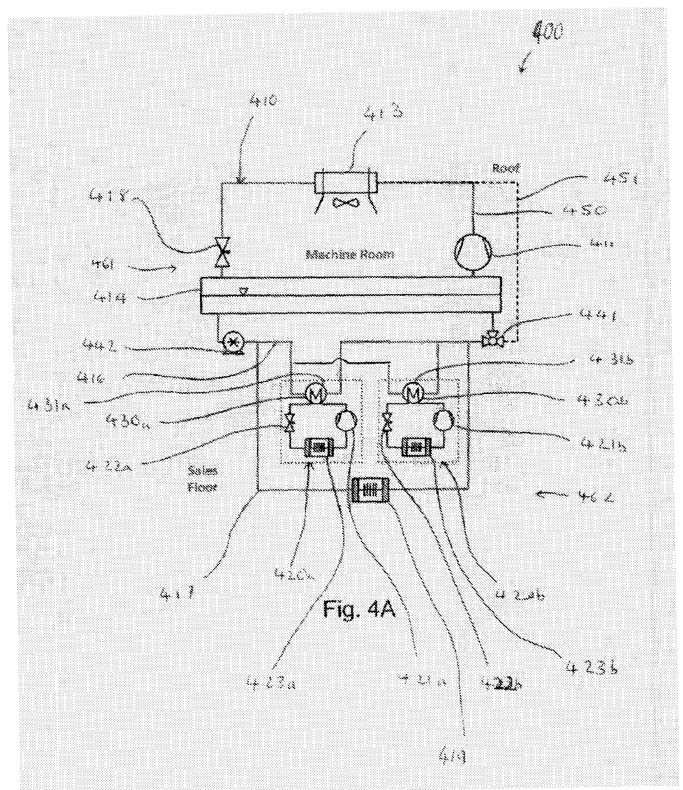

A preferred refrigeration system of the present invention is exemplified and will be now be described with reference to Figure 4.

Figure 4 schematically shows a cascaded refrigeration system 400 with a second refrigeration circuit 410 that has a receiver that delivers liquid second refrigerant, which results in flooded evaporator operation in the first refrigeration circuit. More specifically, Figure 4 shows a refrigeration system 400 which has two first refrigeration circuits 420a, 420b. Each of the first refrigeration circuits 420a, 420b has an evaporator 423, a compressor 421, a heat exchanger 430 and an expansion valve 422. In each circuit 420a, 420b, the evaporator 423, the compressor 421, the heat exchanger 430 and the expansion valve 422 are connected in series with one another in the order listed. Each of the first refrigeration circuits 420a, 420b is provided in a respective refrigeration unit (not shown). In this example, each refrigeration unit is a freezer unit and the freezer unit houses its respective first refrigeration circuit. In this way, a self-contained and dedicated refrigeration circuit is provided to each refrigeration unit. The refrigeration units (not shown), and therefore the first refrigeration circuits 420a, 420b are located on a sales floor 462 of a supermarket.

In this example, the refrigerant in the first refrigeration circuits 420a, 420b, is a low GWP refrigerant such as R744, hydrocarbons (R290, R600a, R1270), R1234yf, R1234ze(E) or R455A. As the skilled person will appreciate, the refrigerants in each of the first refrigeration circuits 420a, 420b may the same or different to the refrigerants in the other of the first refrigeration circuits 420a, 420b.

The refrigeration system 400 also has a second refrigeration circuit 410. The second refrigeration circuit 410 has a compressor branch 450 and an ambient cooling branch 451. The compressor branch 450 is connected in parallel with the ambient cooling branch 451.

The compressor branch 450 has a compressor 411, a condenser 413, an expansion valve 418 and a receiver 414. The compressor 411, the condenser 413 and the expansion valve 418 are connected in series and in the order given. The receiver 414 is connected between the compressor 411 inlet and the expansion valve 418 outlet. The ambient cooling branch 451 has a chiller 452.

The compressor branch 450 and the ambient cooling branch 451 are connected in parallel by first 440 and second 441 controllable valves. The controllable valves 440, 441 are controllable such that the amount of refrigerant flowing in each of the compressor branch 450 and the ambient cooling branch 451 is controllable. The first control valve 440 is connected in series with a pump 442.

The second refrigeration circuit 410 also has two further branches which are connected in parallel with one another: a medium temperature cooling branch 417 and a low temperature cooling branch 416. The medium temperature cooling branch 417 and the low temperature cooling branch 416 are connected between the pump 442 and the second controllable valve 441.

The medium temperature cooling branch 417 has an evaporator 419. The low temperature cooling branch 416 interfaces each of the heat exchangers 430a, 430b of the first refrigeration circuits 420a, 420b at a respective circuit interface location 431a, 431b. Each of the circuit interface locations 431a, 431b is in series-parallel combination with the other circuit interface location 431a, 431b.

The second refrigeration circuit 410 includes components that extend the circuit between the sales floor 462, a machine room 461 and a roof 440. The low temperature cooling branch 416 and the medium temperature cooling branch 417 of the medium temperature refrigeration circuit 410 are preferably located primarily on the sales floor 462. By primarily arranged on the sales floor 462, it is meant that the circuit locations 431a, 431b and the evaporator 419 are arranged on or very near the sales floor 462. The junction between the low 416 and medium 417 temperature cooling branches and some of the pipes of the low 416 and medium 417 branches are however located in the machine room 461.

The compressor branch 450 includes components that extend the branch between the machine room 461 and the roof 460. More specifically, the compressor 411, the expansion valve 418 and the flooded receiver 414 are located in the machine room 461. The condenser 413 is located where ready access to ambient air is possible, such as on the roof 460.

The ambient cooling branch 450 includes components that extend the branch between the machine room 461 and the roof 460. The chiller 452 is also located where ready access to ambient air is possible, such as on the roof 603.

The first and second controllable valves 440, 441 are located in the machine room 461. The pump 442 is located in the machine room 442.

In this example, the refrigerant in the second refrigeration circuit 410 is a R515A, as described above.

Though structurally different, in use, the refrigeration system 400 operates in a similar manner to refrigeration system 200 with the following key differences.

Firstly, the receiver in the second refrigeration circuit 410 in the refrigeration system 400 results in evaporators 419 430a and 430b being flooded evaporator, that is, the refrigerant enters the evaporator as a liquid, and some portion of the liquid refrigerant is not fully vaporised to a gas, which means that essentially no superheating occurs in the evaporator. How much of the refrigerant remains liquid is dependent on the working conditions of the system 400. One feature of the refrigeration system 400 is the receiver 414. The receiver 414 is arranged to separate the gaseous and liquid refrigerant after it has passed through the expansion valve 418 such that the refrigerant allowed through to the medium 417 and low 416 temperature cooling branches - and therefore through to the evaporator 419 and heat exchangers 430a, 430b - is essentially 100% liquid. Another key feature of the refrigeration system 400 is the pump 442. The pump 442 drives the refrigerant to the medium 417 and low 416 temperature branches. In alternative system arrangements, the density difference between the liquid and gaseous phases of the refrigerant drives the system and no pump or fan is required.

As the skilled person will appreciate based on the disclosure and teaching contained herein, there are several advantages associated with using a refrigeration arrangement which uses a flooded evaporator according to the present invention, as disclosed for example in system 400. Applicants have found that one such advantage is and unexpected improvement in the coefficient of performance (COP). Without necessarily being bound to any particular theory, it is believed that this advantage, which is unexpected, arises in part because less compressor 411 work is required and the cooling capacity of the second refrigeration circuit 410 is improved because the system allows operation with superheating the refrigerant before it enters the compressor.

A second difference in the way the refrigeration system 400 operates compared to the refrigeration system 200 lies in the provision of the ambient cooling branch 451 and controllable valves 440, 441. The ambient cooling branch 451 allows the compressor branch 450 to be bypassed when the ambient temperature is sufficiently low to chill the refrigerant. This is achieved by routing the ambient cooling branch 451 to the roof 460 to provide maximum exposure of the refrigerant to the ambient air temperature. This is sometimes called winter operation. Usefully, this provides essentially free chilling of the refrigerant in the second refrigeration circuit 410. Clearly this is advantageous both from a cost and environmental perspective as energy consumption is greatly reduced as compared to running the compressor branch 450.

For the purposes of convenience, the term "flooded system," "flooded cascade system," and the like refer to systems of the present disclosure in which at least one and preferably all of the heat exchangers in the first refrigeration circuit (preferably low temperature circuit) for condensing said first refrigerant (preferably low temperature refrigerant) are flooded evaporators for the second refrigerant (preferably the medium temperature refrigerant). In preferred embodiments, the medium temperature evaporator is also a flooded evaporator. The potential advantages described in reference to the cascaded refrigeration system apply equally well to the flooded cascaded refrigeration system: the terms used to describe the flooded and non-flooded cascaded refrigeration system being comparable.

Further advantages of the flooded cascaded refrigeration system can include: reduced energy consumption due to exploitation of the ambient cooling branch (winter operation); improved heat transfer performance in the heat exchangers and evaporators due to their flooded operation; no thermostatic expansion valves are required due to the provision of a pump in the circuit; and low cost materials can be used to manufacture the second refrigeration circuit due to it being suitable for low pressure refrigerant.

Particularly in view of the advantages described herein, the present invention includes a cascaded refrigeration system, comprising: a plurality of first refrigeration circuits, with each first refrigeration circuit comprising a first refrigerant which is flammable and which has a GWP of about 150 or less, a compressor having a horse power rating of about 1.49 kilowatts (about 2 horse power) or less, and a heat exchanger in which said first refrigerant condenses; and a second refrigeration circuit containing a second refrigerant which is non-flammable, and a flooded evaporator in which said second refrigerant evaporates at a temperature below said first refrigerant condensing temperature wherein said second refrigerant evaporates in said heat exchanger by absorbing heat from said first refrigerant.

Particularly in view of the advantages described herein, the present invention also includes a cascaded refrigeration system, comprising: a plurality of first refrigeration circuits, with each first refrigeration circuit comprising a first refrigerant which is flammable and which has a GWP of about 150 or less, a compressor having a horse power rating of about 1.49 kilowatts (about 2 horse power) or less, and a heat exchanger in which said first refrigerant condenses; and a second refrigeration circuit containing a second refrigerant which is non-flammable and which has a GWP of up to about 500, and a flooded evaporator in which said second refrigerant evaporates at a temperature below said first refrigerant condensing temperature wherein said second refrigerant evaporates in said heat exchanger by absorbing heat from said first refrigerant.

In preferred embodiments, each low temperature refrigeration circuit comprises a flammable low temperature refrigerant having a GWP of about 150 or less and comprising at least about 50% by weight, or at least about 75% by weight, or at least 95% by weight, or at least 99% by weight of R744, R290, R600a, R1270, R1234yf, R1234ze(E), R455A and combinations of these and the medium temperature refrigeration circuit contains a flooded evaporator.

In preferred embodiments, each low temperature refrigeration circuit comprises a flammable low temperature refrigerant having a GWP of about 150 or less and comprising at least about 50% by weight, or at least about 75% by weight, or at least 95% by weight, or at least 99% by weight of R744, R290, R600a, R1270, R1234yf, R1234ze(E), R455A and the medium temperature refrigeration circuit contains a medium temperature refrigerant, wherein said medium temperature refrigerant is non-flammable and has a GWP of up to about 500, and a flooded evaporator.

In preferred embodiments, each low temperature refrigeration circuit comprises a flammable low temperature refrigerant having a GWP of about 150 or less and comprising at least about 50% by weight, or at least about 75% by weight, or at least 95% by weight, or at least 99% by weight of R744, R290, R600a, R1270, R1234yf, R1234ze(E), R455A and combinations of these and the medium temperature refrigeration circuit contains a medium temperature refrigerant, wherein said medium temperature refrigerant is non-flammable having a GWP of up to about 500 and comprising at least about 50% by weight, or at least about 75% by weight, or at least 85% by weight of R1234ze(E), and a flooded evaporator.

In preferred embodiments, each low temperature refrigeration circuit comprises a flammable low temperature refrigerant having a GWP of about 150 or less and comprising at least about 50% by weight, or at least about 75% by weight, or at least 95% by weight, or at least 99% by weight of R744, R290, R600a, R1270, R1234yf, R1234ze(E), R455A and combinations of these and the medium temperature refrigeration circuit contains a medium temperature refrigerant, wherein said medium temperature refrigerant is non-flammable having a GWP of up to about 500 and comprising at least about 50% by weight, or at least about 75% by weight, or at least 85% by weight of R1234ze(E) and from about 10% by weight to about 15% by weight of R227ea, and a flooded evaporator.

In preferred embodiments, each low temperature refrigeration circuit comprises a flammable low temperature refrigerant having a GWP of about 150 or less and comprising at least about 50% by weight, or at least about 75% by weight, or at least 95% by weight, or at least 99% by weight of R744, R290, R600a, R1270, R1234yf, R1234ze(E), R455A and combinations of these and the medium temperature refrigeration circuit contains a medium temperature refrigerant, wherein said medium temperature refrigerant is non-flammable having a GWP of up to about 500 and comprising about 88% by weight of R1234ze(E) and about 12% by weight of R227ea, and a flooded evaporator.

### Flooded cascaded refrigeration system - alternatives

The alternatives described above in reference to the cascaded refrigeration system apply equally well to the flooded cascaded refrigeration system: the terms first and second refrigeration circuit, circuit interface location and heat exchanger being comparable. Other alternatives include removal of the ambient cooling branch 451 and/or reversion of the flooded system to a direct expansion system.

A yet further alteration of the system 400 which is envisaged is that the ambient cooling branch 451 may be shortened and simplified such that it only bypasses the compressor 411, rather than the entire compressor branch. This arrangement is shown in Figure 4A.

Figure 4A shows a refrigeration system 400 which is the largely the same as that described in reference to Figure 4 with the following exceptions:
- The chiller 452 of Figure 4 is not present as it is no longer required. This is because the ambient cooling branch 451 no longer bypasses the chiller 413 and so it does not require its own dedicated chiller.
- The first controllable valve 440 is not present as it is no longer required. This is because the refrigerant from the ambient cooling branch 451 simply feeds into the chiller 413 line, rather than meeting a junction of branches.
- The ambient cooling branch 451 is connected in parallel with the compressor 411 between the second controllable valve 441 and the line between the compressor 411 and the chiller 413.

Advantageously, the use of a shortened ambient chilling branch, that is, one in which the branch routes liquid refrigerant from receiver outlet to the condenser inlet results in: first, a simplified circuit as the chiller and first controllable valve at the inlet of the receiver pump are no longer required; and second, a lower cost circuit, since the amount of extra piping for the ambient chilling branch and the number of components is reduced, therefore reducing material costs.

As will be clear to the person skilled in the art in view of the teachings contained here, by virtue of the preferred modular first refrigeration circuit design the refrigeration system of the preferred embodiments of the present invention allows use of non-flammable, low-pressure refrigerants with relatively low GWP in the second refrigeration circuit. Further, the system 400 allows use of flammable, low-pressure refrigerants with low GWP in the first refrigeration circuits. Further still, by virtue of the use of an ambient cooling branch, the system provides reduced energy usage. Yet further still, by virtue of its flooded design, the system delivers improved system efficiencies. Accordingly, a refrigeration system of reduced environmental impact is provided through use of reduced GWP refrigerants, reduced energy usage and improved system efficiency.

### Suction line heat exchanger

A further possible alteration of any of the systems forming part of this disclosure is that any number of the self-contained refrigeration circuits may include a suction line heat exchanger (SLHX).

More specifically, any of the first refrigeration circuits 220a, 220b, 220c in system 200 may include an SLHX; and any of the first refrigeration circuits 420a, 420b may include an SLHX. For comparison, Figure7A shows a refrigeration circuit 700 without a SLHX; while Figure 7B shows a refrigeration circuit 750 with a SLHX 760.

The circuit 700 in Figure 7A has a compressor 710, a heat exchanger 720, an expansion valve 730 and an evaporator 740. The compressor 710, the heat exchanger 720, the expansion valve 730 and the evaporator 740 are connected in series and in the order listed. In use, the refrigeration circuit 700 functions as previously described.

The circuit 750 in Figure 7B has the same components as the circuit 700, plus an additional SLHX 760. The SLHX provides a heat exchanging interface between the line connecting the evaporator 740 and the compressor 710, and the line connecting the heat exchanger 720 and the expansion valve 730. In other words, the SLHX 760 is positioned between the line connecting the evaporator 740 and the compressor 710 (herein referred to as the vapour line), and the line connecting the heat exchanger 720 and the expansion valve 730 (herein referred to as the liquid line).

In use, the SLHX transfers heat from the liquid line, after the heat exchanger 720, to the vapour line, after the evaporator 740. This results in two effects taking place: a first which improves the efficiency of the circuit 700; and a second which reduces the efficiency of the circuit 700.

Firstly, advantageously, on the liquid line side - that is, the high pressure side - the sub-cooling of the liquid refrigerant is increased. This is because extra heat is rejected to the liquid expansion side, which reduces the temperature of the refrigerant entering the expansion valve 730. This additional sub-cooling leads to lower inlet quality in the evaporator 740 after the expansion valve 730 process. This increases the enthalpy difference and so the capacity of the refrigerant to absorb heat in the evaporator 740 stage is increased. Accordingly, the performance of the evaporator 740 is improved.

Secondly, disadvantageously, on the vapour line side - that is, the low pressure side - the refrigerant exiting the evaporator 740 receives extra heat from the liquid line, which effectively increases the superheating. This results in a higher suction line temperature. As a result of the higher suction line temperature to the compressor 710, the enthalpy difference of the compression process increases. This increases the compressor power required to compress the refrigerant. Accordingly, this has a detrimental effect on the system performance.

In summary both the first and second effects of improved evaporator capacity and improved compressor power requirements need to be considered in order to determine whether or not introducing a SLHX results in an overall beneficial effect. For certain refrigerants, such as R717, the use of a SLHX leads to an overall reduction of the system efficiency. However, in contrast, use of a. SLHX leads to an overall positive effect in the systems of the type illustrated in the Figures as systems 200 and 300 herein.

### Supporting data

Data intended to demonstrate the technical effects of the various arrangements of this disclosed and to aid the person skilled in the art in putting the various arrangements in to practice will now be presented.

Table 1 shows the overall GWP for varying proportions of R515A and R744 refrigerants in the refrigeration system: 1 being the maximum combined value i.e. 100%. According to the 5th Intergovernmental Panel on Climate Change, R515A has a GWP of 403 and R755 a GWP of 1. Consequently, the overall GWP for 0 proportion R515A and 1 proportion R744 is 1 as [(1 x 1) = 1]. Conversely, the overall GWP for 0.05 proportion R515A and 0.95 proportion R755 is 21.1 since [(0.05 x 403) + (0.95 x 1) = 21.1]. In this way Table 1 shows the charge ratio restrictions considering GWP criteria.

**Table 1**

| **R515A** | **R744** | **Overall GWP** |
|---|---|---|
| 0 | 1 | 1 |
| 0.05 | 0.95 | 21.1 |
| 0.1 | 0.9 | 41.2 |
| 0.15 | 0.85 | 61.3 |
| 0.2 | 0.8 | 81.4 |
| 0.25 | 0.75 | 101.5 |
| 0.3 | 0.7 | 121.6 |
| 0.31 | 0.69 | 125.62 |
| 0.32 | 0.68 | 129.64 |
| 0.33 | 0.67 | 133.66 |
| 0.34 | 0.66 | 137.68 |
| 0.35 | 0.65 | 141.7 |
| 0.36 | 0.64 | 145.72 |
| 0.37 | 0.63 | 149.74 |
| 0.38 | 0.62 | 153.76 |
| 0.39 | 0.61 | 157.78 |
| 0.4 | 0.6 | 161.8 |
| 0.5 | 0.5 | 202 |
| 0.6 | 0.4 | 242.2 |
| 0.7 | 0.3 | 282.4 |
| 0.8 | 0.2 | 322.6 |
| 0.9 | 0.1 | 362.8 |
| 1 | 0 | 403 |

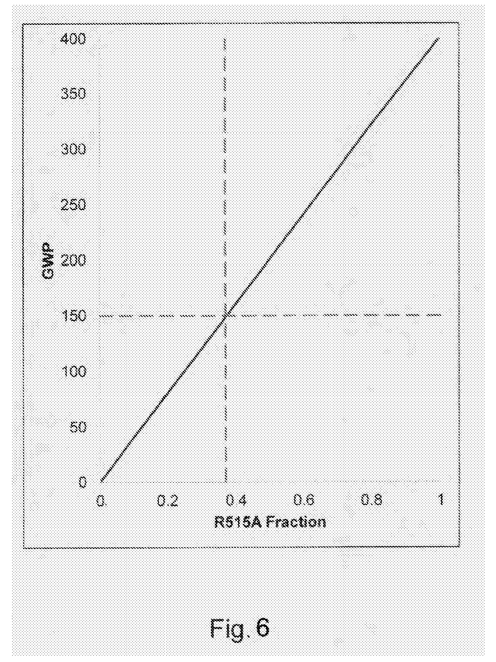

Figure 6 shows the data in Table 1 in graphical form. The proportion of R515A is shown on the x-axis, and the overall GWP is shown on the y-axis. It is clear from this graph that there is a direct proportional relationship between the relative proportions of R515A and R744 and GWP: as the proportion of R515A increases, as does the GWP for the system. This is because R515A has a much higher GWP than R744, The directly proportional relationship is shown by the straight line on the graph which goes from 1 GWP at 0 proportion R515A to around 400 GWP at 1 proportion R515A. It is clear from this graph that the maximum allowed system GWP of 150 in preferred embodiments is found at around 0.35 weight proportion R515A.

Table 2 shows the boiling pressures at varying boiling temperatures for: R1233zd(E) refrigerant; a blend of 50 wt% proportion R1233zd(E) and 50wt% proportion R1234ze; and a blend of 33wt% R1233zd(E) and 67wt% R1234ze.

**Table 2**

| **Refrigerant** | **Evaporator Temperature (°C)** | **Evaporator Pressure (bar)** |
|---|---|---|
| R1233zd | -1 | 0.46 |
| | 5 | 0.60 |
| | 10 | 0.73 |
| R1233zd/R1234ze (50%/50%) | -1 | 1.02 |
| | 5 | 1.29 |
| | 10 | 1.55 |
| R1233zd/R1234ze (33%/67%) | -12 | 1.00 |
| | -1 | 1.27 |
| | 5 | 1.60 |
| | 10 | 1.92 |

The test refrigeration system is operated with an indoor refrigerant. The R1233zd(E) transHCFO-1233zd and the R1234ze is transHFO-1234ze. The results in Table 2 show that the compositions in which the amount of transHFO-1234ze is at least 50% by weight permit the indoor circuit to operate under pressures greater than one atmosphere. Such a low pressure system is advantageous as it avoids the need for a purge system - aiding system complexity, while at the same time providing a system pressure sufficiently low to allow the use of relatively low-cost vessels and conduits. Further still, the low pressure avoids refrigerant leaks that might otherwise occur in high pressure systems.

Another characteristic which varies with the proportions of R1233zd(E) and R1234ze in the blend is the flammability of the refrigerant in the event of a leak from the refrigeration system. Table 3 shows various compositions by weight of the R1233zd(E) and R1234ze blend and the respective flammability of each composition. As is made clear in Table 3, blends having in excess of 67% by weight of transHFO-1234ze are flammable as measured according to American Society for Testing and Materials (ASTM) 681.

**Table 3**

| **Nominal Composition (wt %)** | | **Initial Vapor Composition** ( **wt%)** | | **Flammability** |
|---|---|---|---|---|
| **R1233zd** | **R1234ze** | **R1233zd** | **R1234ze** | |
| 50.0 | 50.0 | 19.6 | 80.4 | Non-flammable |
| 40.0 | 60.0 | 13.4 | 86.6 | Non-flammable |
| 34.0 | 66.0 | 10.4 | 89.6 | Non-flammable |
| 33.0 | 67.0 | 9.9 | 90.1 | Non-flammable |
| 32.0 | 68.0 | 9.5 | 90.5 | Flammable |

Table 4a shows blends not previously mentioned in this disclosure but which are be considered in Table 4b.

**Table 4a**

| **Refrigerant** | **R1234ze(E)(E) (wt%)** | **R1233zd(E) (wt%)** | **CF3I (wt%)** | **R227ea (wt%)** |
|---|---|---|---|---|
| A1 | 78.0% | 2.0% | 20% | n/a |
| A2 | 84.0% | 2.0% | 9.6% | 4.4% |

Table 4b shows a comparison of characteristics of the comparative refrigeration system described in reference to Figure 1B but without a mechanical subcooler ('Comparative Example'); the comparative refrigeration system described in reference to Figure 1B with the mechanical subcooler ('Comparative example with mechanical subcooler'); the cascaded refrigeration system described in reference to Figure 2 ('Option 1'); and the flooded cascaded refrigeration circuit described in reference to Figure 4 ('Option 2'), for different combinations of refrigerants.

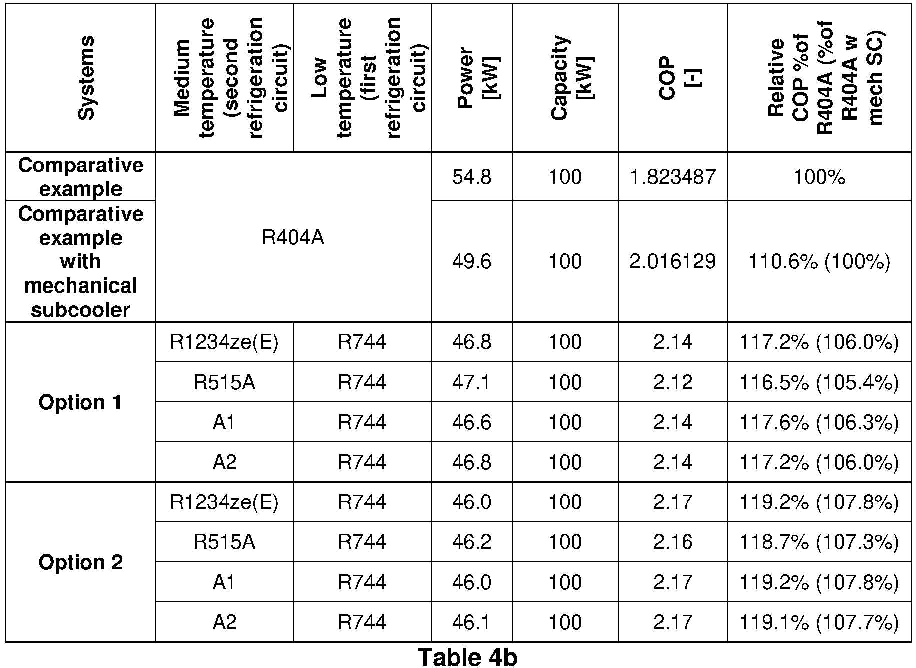

Table 4b includes information on the coefficient of performance (COP) of each system. The COP is the ratio of useful cooling output from the system to work input to the system. Higher COPs equate to lower operating costs. The relative COP is the COP relative to the comparative example refrigeration system.

It is clear from Table 4b that the flooded cascaded refrigeration circuit achieves the best COP as its values for COP are in all cases higher than for the other systems.

The results shown in Table 4b are based on the below assumptions, where MT means medium temperature (second refrigeration circuit) and LT means low temperature (first refrigeration circuit) and units are as given.
- Comparative example R404A combined MT and LT system
- Load distribution
   ∘ LT: 1/3 (33,000W)
   ∘ MT: 2/3 (67,000W)
- Volumetric efficiency: 95% for both MT ad LT
- Isentropic efficiency
   ∘ R404A: MT/LT, 0.72/0.68
   ∘ R134a: MT, 0.687
   ∘ R744: LT, 0.671
- Condensing temperature: 105F (40.6°C)
- MT evaporation temperature: 20F (-6.7°C) (22F (-5.6°C) for Self-contained units due to
   lower pressure drop)
- LT evaporation temperature: -25F (-31.7°C)
- Evaporator superheat: 10F (-12.2°C)
- Suction line temperature rise
   ∘ Comparative example: MT: 25F; (-3.9°C) LT: 50F (10°C)
   ∘ Cascade/ self-contained: MT: 10F (-12.2°C); LT: 25F (-3.9°C) (Self-contained units have shorter lines and therefore less heat infiltration)
   o Cascade/pumped: MT:1 0F (-12.2°C); LT: 25F (-3.9°C)
- SLHX efficiency when used: 35%
- Mechanical sub cooler outlet temperature: 50F (10°C)
It will be appreciated that the LT load of this example (33,000 watts) will be provided according to the preferred aspects of the present invention by cumulative power rating of numerous small compressors. For example, if the LT portion of the refrigeration systems uses compressors rated at about 1500 watts (about 2 horsepower) numerous (e.g., 20) of such small compressors will be used according to the present invention. In contrast, it would be contemplated that the compressor load carried by the medium temperature system could be handled by a series of larger compressors (having a power rating of 5 horse power or greater) to provide the 67,000 watts (about 90 horse power) of cooling.

Table 5 shows a comparison of characteristics of the comparative example refrigeration system described in reference to Figure 1 and the cascaded refrigeration system described in reference to Figure 2 for different combinations of refrigerants in the cascaded refrigeration system and with suction line liquid line (SLHX) in the second refrigeration circuits (the medium temperature stage). Like Table 4b, Table 5 includes information on the actual and relative COPs of each system.

**Table 5**

| **Systems** | **Medium temperatur e (second refrigerati on circuit)** | **Low temperature (first refrigeratio n circuit)** | **Powe r [kW]** | **Capacit y [kW]** | **COP [-]** | **Relative COP %of R404A (%of R404A w mech SC)** |
|---|---|---|---|---|---|---|
| **Comparative Example** | R404A | | 54.8 | 100 | 1.82 3 | 100% |
| **Comparative Example with mechanical subcooler** | | | 49.6 | 100 | 2.01 6 | 110.6% (100%) |
| **Option 1 with SLHX** | R1234ze(E) | R744 | 43.92 | 100 | 2.27 7 | 124.9% (112.9%) |
| | R515A | R744 | 44.05 | 100 | 2.27 0 | 124.5% (112.6%) |
| | A1 | R744 | 43.97 | 100 | 2.27 4 | 124.7% (112.8%) |
| | A2 | R744 | 43.98 | 100 | 2.27 4 | 124.7% (112.8%) |

It is clear from Table 5 that higher COP is achieved by using the SLHX compared to not using the SLHX. This is demonstrated by the values for COP being higher in Table 5 than in Table 4b for the same combinations of refrigerant in the cascaded refrigerant system.

## Claims

1. A cascaded refrigeration system comprising:
(a) a plurality of low temperature refrigeration circuits, with each low temperature refrigeration circuit comprising:
(i) a flammable low temperature refrigerant having a GWP of about 150 or less;
(ii) a compressor having a horse power rating of about 2 horse power (about 1.49 kilowatts) or less; and
(iii) a heat exchanger in which said flammable low temperature refrigerant condenses; and
(b) a medium temperature refrigeration circuit comprising a non-flammable medium temperature refrigerant evaporating at a temperature below said low temperature refrigerant condensing temperature, wherein said medium temperature refrigerant evaporates in said heat exchanger by absorbing heat from said flammable refrigerant in said low temperature refrigeration circuit.

2. The cascaded refrigeration system of claim 1, wherein each refrigeration circuit is in a modular refrigeration unit and wherein at least one of said modular refrigeration units is located in a first area open to the public.

3. The cascaded refrigeration system of claim 2, wherein the second refrigeration circuit includes portions that extend the second refrigeration circuit between the first area and a second area.

4. The cascaded refrigeration system of claim 3, wherein the second area is a machine room.

5. The cascaded refrigeration system of claim 1, wherein said non-flammable medium temperature refrigerant comprises at least about 50% by weight, or at least about 75% by weight, or at least 85% by weight of R1234ze(E) and from about 10% by weight to about 15% by weight of R227ea, preferably wherein said non-flammable medium temperature refrigerant is R515A.

6. The cascaded refrigeration system of claim 1, wherein said flammable low temperature refrigerant comprises at least about 50% by weight of R744, C3 - C4 hydrocarbons, R1234yf, R1234ze(E), R455A and combinations of these.

7. The cascaded refrigeration system of claim 6, wherein said flammable low temperature refrigerant comprises at least about 50% by weight of R290, R600a, R1270 and combinations of these.

8. The cascaded refrigeration system of claim 6, wherein said flammable low temperature refrigerant comprises at least about 75% by weight of R1234yf, R1234ze(E), R455A and combinations of these.

9. The cascaded refrigeration system of claim 2 wherein said medium temperature refrigeration system is located substantially completely outside of said low temperature refrigeration unit and wherein said flammable low temperature refrigerant comprises at least about 75% by weight of R1234yf, R1234ze(E), R455A and combinations of these and wherein said non-flammable medium temperature refrigerant comprises at least about 50% by weight, or at least about 75% by weight, or at least 85% by weight of R1234ze(E) and from about 10% by weight to about 15% by weight of R227ea, preferably wherein said non-flammable medium temperature refrigerant is R515A.

10. The cascaded refrigeration system of claim 1 wherein the medium temperature refrigeration circuit comprises a non-flammable medium temperature refrigerant evaporating in said heat exchanger by absorbing heat from said flammable refrigerant in said low temperature refrigeration circuit, wherein said heat exchanger is a flooded heat exchanger and wherein said non-flammable medium temperature refrigerant evaporates at a temperature below said low temperature refrigerant condensing temperature.

11. The cascaded refrigeration system of claim 10 wherein each refrigeration circuit is in a modular refrigeration unit and wherein at least one of said modular refrigeration units is located in a first area open to the public.

12. The cascaded refrigeration system of claim 10, wherein each first refrigeration circuit further comprises a fluid expansion device.

13. The cascaded refrigeration system of claim 12, wherein the fluid expansion device is a capillary tube.

14. The cascaded refrigeration system of claim 12, wherein the fluid expansion device is an orifice tube.

15. The cascaded refrigeration system of claim 11 wherein said medium temperature refrigeration system is located substantially completely outside of said low temperature refrigeration unit and wherein said flammable low temperature refrigerant comprises at least about 75% by weight of R1234yf, R1234ze(E), R455A and combinations of these and wherein said non-flammable medium temperature refrigerant comprises at least about 50% by weight, or at least about 75% by weight, or at least 85% by weight of R1234ze(E) and from about 10% by weight to about 15% by weight of R227ea, optionally wherein said non-flammable medium temperature refrigerant is R515A.

## Patentansprüche

1. Kaskadiertes Kühlsystem, umfassend:
(a) eine Vielzahl von Niedrigtemperatur-Kühlkreisläufen, wobei jeder Niedrigtemperatur-Kühlkreislauf Folgendes umfasst:
(i) ein brennbares Niedrigtemperatur-Kühlmittel mit einem GWP von etwa 150 oder darunter;
(ii) einen Kompressor mit einer Leistung von etwa 2 Pferdestärken (etwa 1,49 Kilowatt) oder darunter; und
(iii) einen Wärmetauscher, in dem das brennbare Niedrigtemperatur-Kühlmittel kondensiert; und
(b) einen Mitteltemperatur-Kühlkreislauf, der ein nicht brennbares Mitteltemperatur-Kühlmittel umfasst, das bei einer Temperatur unter der Kondensationstemperatur des Niedrigtemperatur-Kühlmittels verdampft, wobei das Mitteltemperatur-Kühlmittel im Wärmetauscher verdampft, indem es Wärme aus dem brennbaren Kühlmittel im Niedrigtemperatur-Kühlkreislauf absorbiert.

2. Kaskadiertes Kühlsystem gemäß Anspruch 1, wobei jeder Kühlkreislauf in einer modularen Kühleinheit ist und wobei mindestens eine der modularen Kühleinheiten in einem ersten Bereich, der öffentlich zugänglich ist, angeordnet ist.

3. Kaskadiertes Kühlsystem gemäß Anspruch 2, wobei der zweite Kühlkreislauf Abschnitte beinhaltet, die den zweiten Kühlkreislauf zwischen dem ersten Bereich und einem zweiten Bereich erstrecken.

4. Kaskadiertes Kühlsystem gemäß Anspruch 3, wobei der zweite Bereich ein Maschinenraum ist.

5. Kaskadiertes Kühlsystem gemäß Anspruch 1, wobei das nicht brennbare Mitteltemperatur-Kühlmittel mindestens etwa 50 Gew.-%, oder mindestens etwa 75 Gew.-%, oder mindestens etwa 85 Gew.-% R1234ze(E) und von etwa 10 Gew.-% bis etwa 15 Gew.-% R227ea umfasst, wobei bevorzugt das nicht brennbare Mitteltemperatur-Kühlmittel R515A ist.

6. Kaskadiertes Kühlsystem gemäß Anspruch 1, wobei das brennbare Niedrigtemperatur-Kühlmittel mindestens etwa 50 Gew.-% von R744, C3 - C4 Kohlenwasserstoffen, R1234yf, R1234ze(E), R455A und Kombinationen derselben umfasst.

7. Kaskadiertes Kühlsystem gemäß Anspruch 6, wobei das brennbare Niedrigtemperatur-Kühlmittel mindestens etwa 50 Gew.-% von R290, R600a, R1270 und Kombinationen derselben umfasst.

8. Kaskadiertes Kühlsystem gemäß Anspruch 6, wobei das brennbare Niedrigtemperatur-Kühlmittel mindestens 75 Gew.-% von R1234yf, R1234ze(E), R455A und Kombinationen derselben umfasst.

9. Kaskadiertes Kühlsystem gemäß Anspruch 2, wobei das Mitteltemperatur-Kühlsystem im Wesentlichen vollständig außerhalb der Niedrigtemperatur-Kühleinheit angeordnet ist und wobei das brennbare Niedrigtemperatur-Kühlmittel mindestens etwa 75 Gew.-% von R1234yf, R1234ze(E), R455A und Kombinationen derselben umfasst und wobei das nicht brennbare Mitteltemperatur-Kühlmittel mindestens etwa 50 Gew.-%, oder mindestens etwa 75 Gew.-%, oder mindestens etwa 85 Gew.-% R1234ze(E) und von etwa 10 Gew.-% bis etwa 15 Gew.-% R227ea umfasst, wobei bevorzugt das nicht brennbare Mitteltemperatur-Kühlmittel R515A ist.

10. Kaskadiertes Kühlsystem gemäß Anspruch 1, wobei der Mitteltemperatur-Kühlkreislauf ein nicht brennbares Mitteltemperatur-Kühlmittel umfasst, das im Wärmetauscher verdampft, indem es Wärme aus dem brennbaren Kühlmittel im Niedrigtemperatur-Kühlkreislauf absorbiert, wobei der Wärmetauscher ein überschwemmter Wärmetauscher ist, und wobei das nicht brennbare Mitteltemperatur-Kühlmittel bei einer Temperatur unter der Kondensationstemperatur des Niedrigtemperatur-Kühlmittels verdampft.

11. Kaskadiertes Kühlsystem gemäß Anspruch 10, wobei jeder Kühlkreislauf in einer modularen Kühleinheit ist und wobei mindestens eine der modularen Kühleinheiten in einem ersten Bereich, der öffentlich zugänglich ist, angeordnet ist.

12. Kaskadiertes Kühlsystem gemäß Anspruch 10, wobei jeder erste Kühlkreislauf ferner eine Flüssigkeitsausdehnungsvorrichtung umfasst.

13. Kaskadiertes Kühlsystem gemäß Anspruch 12, wobei die Flüssigkeitsausdehnungsvorrichtung ein Kapillarrohr ist.

14. Kaskadiertes Kühlsystem gemäß Anspruch 12, wobei die Flüssigkeitsausdehnungsvorrichtung ein Drosselrohr ist.

15. Kaskadiertes Kühlsystem gemäß Anspruch 11, wobei das Mitteltemperatur-Kühlsystem im Wesentlichen vollständig außerhalb der Niedrigtemperatur-Kühleinheit angeordnet ist und wobei das brennbare Niedrigtemperatur-Kühlmittel mindestens etwa 75 Gew.-% von R1234yf, R1234ze(E), R455A und Kombinationen derselben umfasst und wobei das nicht brennbare Mitteltemperatur-Kühlmittel mindestens etwa 50 Gew.-%, oder mindestens etwa 75 Gew.-%, oder mindestens etwa 85 Gew.-% R1234ze(E) und von etwa 10 Gew.-% bis etwa 15 Gew.-% R227ea umfasst, wobei optional das nicht brennbare Mitteltemperatur-Kühlmittel R515A ist.

## Revendications

1. Système de réfrigération en cascade comprenant :
(a) une pluralité de circuits de réfrigération à basse température, chaque circuit de réfrigération à basse température comprenant :
(i) un réfrigérant à basse température inflammable ayant un PRG d'environ 150 ou moins ;
(ii) un compresseur ayant une puissance nominale en chevaux d'environ 2 chevaux-vapeur (environ 1,49 kilowatts) ou moins ; et
(iii) un échangeur de chaleur dans lequel ledit réfrigérant à basse température inflammable se condense ; et
(b) un circuit de réfrigération à température moyenne comprenant un réfrigérant à température moyenne non inflammable s'évaporant à une température inférieure à ladite température de condensation de réfrigérant à basse température, dans lequel ledit réfrigérant à température moyenne s'évapore dans ledit échangeur de chaleur en absorbant la chaleur dudit réfrigérant inflammable dans ledit circuit de réfrigération à basse température.

2. Système de réfrigération en cascade selon la revendication 1, dans lequel chaque circuit de réfrigération est dans une unité de réfrigération modulaire et dans lequel au moins une desdites unités de réfrigération modulaires est située dans une première zone ouverte au public.

3. Système de réfrigération en cascade selon la revendication 2, dans lequel le second circuit de réfrigération inclut des parties qui étendent le second circuit de réfrigération entre la première zone et une seconde zone.

4. Système de réfrigération en cascade selon la revendication 3, dans lequel la seconde zone est une salle des machines.

5. Système de réfrigération en cascade selon la revendication 1, dans lequel ledit réfrigérant à température moyenne non inflammable comprend au moins environ 50 % en poids, ou au moins environ 75 % en poids, ou au moins 85 % en poids de R1234ze(E) et d'environ 10 % en poids à environ 15 % en poids de R227ea, de préférence dans lequel ledit réfrigérant à température moyenne non inflammable est le R515A.

6. Système de réfrigération en cascade selon la revendication 1, dans lequel ledit réfrigérant à basse température inflammable comprend au moins environ 50 % en poids de R744, d'hydrocarbures en C3 - C4, de R1234yf, de R1234ze(E), de R455A et de combinaisons de ceux-ci.

7. Système de réfrigération en cascade selon la revendication 6, dans lequel ledit réfrigérant à basse température inflammable comprend au moins environ 50 % en poids de R290, R600a, R1270 et de combinaisons de ceux-ci.

8. Système de réfrigération en cascade selon la revendication 6, dans lequel ledit réfrigérant à basse température inflammable comprend au moins environ 75 % en poids de R1234yf, R1234ze(E), R455A et de combinaisons de ceux-ci.

9. Système de réfrigération en cascade selon la revendication 2, dans lequel ledit système de réfrigération à température moyenne est situé sensiblement complètement à l'extérieur de ladite unité de réfrigération à basse température et dans lequel ledit réfrigérant à basse température inflammable comprend au moins environ 75 % en poids de R1234yf, R1234ze(E), R455A et de combinaisons de ceux-ci et dans lequel ledit réfrigérant à température moyenne non inflammable comprend au moins environ 50 % en poids, ou au moins environ 75 % en poids, ou au moins 85 % en poids de R1234ze(E) et d'environ 10 % en poids à environ 15 % en poids de R227ea, de préférence dans lequel ledit réfrigérant à température moyenne non inflammable est le R515A.

10. Système de réfrigération en cascade selon la revendication 1, dans lequel le circuit de réfrigération à température moyenne comprend un réfrigérant à température moyenne non inflammable s'évaporant dans ledit échangeur de chaleur en absorbant la chaleur dudit réfrigérant inflammable dans ledit circuit de réfrigération à basse température, dans lequel ledit échangeur de chaleur est un échangeur de chaleur noyé et dans lequel ledit réfrigérant à température moyenne non inflammable s'évapore à une température inférieure à ladite température de condensation de réfrigérant à basse température.

11. Système de réfrigération en cascade selon la revendication 10, dans lequel chaque circuit de réfrigération est dans une unité de réfrigération modulaire et dans lequel au moins une desdites unités de réfrigération modulaires est située dans une première zone ouverte au public.

12. Système de réfrigération en cascade selon la revendication 10, dans lequel chaque premier circuit de réfrigération comprend en outre un dispositif de détente de fluide.

13. Système de réfrigération en cascade selon la revendication 12, dans lequel le dispositif de détente de fluide est un tube capillaire.

14. Système de réfrigération en cascade selon la revendication 12, dans lequel le dispositif de détente de fluide est un tube à orifice.

15. Système de réfrigération en cascade selon la revendication 11, dans lequel ledit système de réfrigération à température moyenne est situé sensiblement complètement à l'extérieur de ladite unité de réfrigération à basse température et dans lequel ledit réfrigérant à basse température inflammable comprend au moins environ 75 % en poids de R1234yf, R1234ze(E), R455A et de combinaisons de ceux-ci et dans lequel ledit réfrigérant à température moyenne non inflammable comprend au moins environ 50 % en poids, ou au moins environ 75 % en poids, ou au moins 85 % en poids de R1234ze(E) et d'environ 10 % en poids à environ 15 % en poids de R227ea, éventuellement dans lequel ledit réfrigérant à température moyenne non inflammable est le R515A.
